# EUROPEAN PATENT APPLICATION

(11) **EP 2 600 327 A1**
(43) Date of publication of application: **05.06.2013**
(21) Application number: 10855277.9
(22) Date of filing: 26.11.2010
(51) Int. Cl.: G08G 1/16

(54) **OBSTACLE DETECTION SYSTEM AND METHOD, AND OBSTACLE DETECTION APPARATUS**

(30) Priority: 29.07.2010 JP 2010170442
(71) Applicant: Panasonic Corporation, Osaka 571-8501 (JP)
(72) Inventor: MURAMATSU, Hirokazu, Osaka-shi, Osaka 540-6207 (JP); TAKEUCHI, Daisuke, Osaka-shi, Osaka 540-6207 (JP)
(74) Representative: Vigand, Philippe
(86) International application number: PCT/JP2010/006925
(87) International publication number: WO 2012/014266

(57) **Abstract**

An obstacle detection system (10) includes an image capturing apparatus (20) for capturing an image of a periphery of a vehicle and outputting an image signal, an obstacle detection apparatus (30) for detecting presence/absence of an obstacle from the image signal, and a lighting apparatus (40) mounted on the vehicle. The obstacle detection apparatus (30) controls turning on/off of the lighting apparatus (40) by a light status control unit (31). When a lighting state of the lighting apparatus (40) has changed, a difference image generating unit (34) generates a difference image between the image signal output from the image capturing apparatus (20) and an image signal of a past frame stored in an image data storing unit (35). An obstacle determining unit (38) determines the presence/absence of an obstacle based on the difference image.

## Description

### [Technical Field]

The present invention relates to an obstacle detection system, and more particularly, to an obstacle detection system capable of detecting an obstacle existing in the periphery of a vehicle in a low illumination environment.

### [Background Art]

In recent years, vehicle-mounted cameras are widely used with the aim of supporting safe driving of vehicles. For example, an image behind a vehicle can be captured by an image capturing apparatus installed at the back of the vehicle and the captured image can be displayed on a display installed at a driver's seat to allow a driver to recognize the presence/absence of an obstacle, such as a pedestrian or a three-dimensional object, behind the vehicle at the time of reversing the vehicle.

Here, in a low illumination environment, such as at nighttime, an image obtained by the vehicle-mounted camera is, in many cases, dark and unclear. Therefore, a driver observing an image displayed on the display has difficulty identifying the presence/absence of an obstacle, so that the possibility of overlooking of the obstacle increases. In a parking support apparatus disclosed in Patent Literature 1, it is possible to detect presence/absence of an obstacle by using together a camera for capturing an image behind a vehicle and a sensor that uses ultrasonic waves, radio waves, a laser or the like, and by using a signal from the sensor in a low illumination environment.

### [Citation List]

### [Patent Literature]

Patent Literature 1: Japanese Patent Application Laid-Open No. 2002-29345

### [Summary of Invention]

### [Technical Problem]

However, with the method described in the above Patent Literature, a sensor separate from the camera is necessary, and the problems are that the cost of the entire apparatus is increased and that the wiring and the like for installing both the camera and the sensor are complicated. In recent years, there is a tendency to use a wide angle lens, such as a fisheye lens, to enable wide-range detection of presence/absence of an obstacle. A plurality of sensors needed to enable a sensor to scan a region as large as such wide-range image, causes further increase in the cost.

The present invention has been made against the background described above. An object of the present invention is to provide an obstacle detection system and method capable of reliably detecting an obstacle in the periphery of a vehicle in a low illumination environment without a need to use a sensor other than a camera.

### [Solution to Problem]

One aspect of the present invention is an obstacle detection system. This obstacle detection system includes an image capturing apparatus for capturing an image of a periphery of a vehicle and generating image information, an obstacle detection apparatus for detecting an obstacle near the vehicle based on the image information, and a lighting apparatus mounted on the vehicle, where the obstacle detection apparatus includes a light control unit for controlling a lighting state of the lighting apparatus, a difference image generating unit for generating a difference image between image information generated by the image capturing apparatus when the lighting apparatus is on and image information generated by the image capturing apparatus when the lighting apparatus is off, and an obstacle determining unit for determining presence/absence of the obstacle based on an image included in the difference image.

Another aspect of the present invention is an obstacle detection method. This obstacle detection method includes capturing an image of a periphery of a vehicle and generating image information, controlling a lighting state of a lighting apparatus mounted on the vehicle, generating a difference image between image information generated by the image capturing apparatus when the lighting apparatus is on and image information generated by the image capturing apparatus when the lighting apparatus is off, and determining presence/absence of an obstacle based on an image included in the difference image.

As will be described later, the present invention includes other aspects. Thus, the disclosure of this invention intends to provide only some of the aspects of the present invention, and does not intend to limit the scope of the claimed invention described herein.

### [Brief Description of Drawings]

[Figure 1] Figure 1 is a block diagram showing a configuration of an obstacle detection system according to an embodiment of the present invention.
[Figure 2] Figure 2 is a timing chart showing an example of a control timing of a lighting apparatus.
[Figure 3] Figure 3(a) is an explanatory diagram showing an example of a captured image of when the lighting apparatus is off. Figure 3(b) is an explanatory diagram showing an example of a captured image of when the lighting apparatus is on. Figure 3(c) is an explanatory diagram showing an example of a difference image.
[Figure 4] Figure 4(a) is an explanatory diagram showing an example of a captured image of when the lighting apparatus is off. Figure 4(b) is an explanatory diagram showing an example of a captured image of when the lighting apparatus is on. Figure 4(c) is an explanatory diagram showing an example of a difference image. Figure 4(d) is an explanatory diagram showing a result of extracting a difference image.
[Figure 5] Figure 5 is a flow chart showing an operation of the obstacle detection system.

### [Description of Embodiments]

A detailed explanation of the present invention is given below. However, the detailed explanation and the appended drawings do not limit the invention.

An obstacle detection system of the present invention includes an image capturing apparatus for capturing an image of a periphery of a vehicle and generating image information, an obstacle detection apparatus for detecting an obstacle near the vehicle based on the image information, and a lighting apparatus mounted on the vehicle, wherein the obstacle detection apparatus includes a light control unit for controlling a lighting state of the lighting apparatus, a difference image generating unit for generating a difference image between image information generated by the image capturing apparatus when the lighting apparatus is on and image information generated by the image capturing apparatus when the lighting apparatus is off, and an obstacle determining unit for determining presence/absence of the obstacle based on an image included in the difference image.

According to this configuration, an obstacle can be detected using the lighting apparatus provided in a vehicle, and an obstacle can be reliably detected even in a low illumination environment without a sensor other than a camera. The obstacle detection system can thereby be provided at a low cost.

The obstacle detection system of the present invention may also include a light status change determining unit for determining a change in the lighting state of the lighting apparatus, and an image data storing unit for storing the image information sent from the image capturing apparatus. When the light status change determining unit determines that the lighting state of the lighting apparatus is changed, the difference image generating unit generates a difference image between the image information sent from the image capturing apparatus and the image information stored in the image data storing unit.

According to this configuration, difference information can be generated by obtaining image information before and after the lighting state of the lighting apparatus is changed. Thus, possibility of erroneous detection due to movement of an object can be reduced.

In the obstacle detection system of the present invention, the light control unit changes the lighting state of the lighting apparatus between image capturing periods of each captured image frame of the image capturing apparatus. According to this configuration, since, for example, image information can be acquired by the image capturing apparatus while the lighting apparatus is off, it is possible to reliably extract difference information of image signals of when the lighting apparatus is on and when it is off.

In the obstacle detection system of the present invention, the lighting apparatus is determined according to a position of the image capturing apparatus installed on the vehicle, or a traveling direction of the vehicle. According to this configuration, an obstacle in the image capturing range or in the traveling direction of a vehicle can be detected, and thus, the accuracy of obstacle detection is increased.

In the obstacle detection system of the present invention, in a case difference information exceeding a threshold value is detected in a region above a horizon in the difference image, the obstacle determining unit determines presence of the obstacle. According to this configuration, the possibility of erroneous detection of an obstacle in a region which is illuminated by the lighting apparatus but where there is no obstacle can be eliminated.

In the obstacle detection system of the present invention, in a case presence of the obstacle is determined, the light control unit changes the lighting state of the lighting apparatus. According to this configuration, for example, in a case the obstacle is a pedestrian, the pedestrian can be notified of the approach of the vehicle.

An obstacle detection method of the present invention includes capturing an image of a periphery of a vehicle and generating image information, controlling a lighting state of a lighting apparatus mounted on the vehicle, generating a difference image between image information generated by the image capturing apparatus when the lighting apparatus is on and image information generated by the image capturing apparatus when the lighting apparatus is off, and determining presence/absence of an obstacle based on an image included in the difference image. Also according to this configuration, an obstacle can be detected using the lighting apparatus provided in a vehicle, and an obstacle can be reliably detected even in a low illumination environment without needing a sensor other than a camera, as described above.

An obstacle detection apparatus of the present invention is for detecting an obstacle near a vehicle based on image information of a periphery of the vehicle generated by an image capturing apparatus, and includes a light control unit for controlling a lighting state of a lighting apparatus mounted on the vehicle, a difference image generating unit for generating a difference image between image information generated by the image capturing apparatus when the lighting apparatus is on and image information generated by the image capturing apparatus when the lighting apparatus is off, and an obstacle determining unit for determining presence/absence of the obstacle based on an image included in the difference image. Also according to this configuration, an obstacle can be detected using the lighting apparatus provided in a vehicle, and an obstacle can be reliably detected even in a low illumination environment without needing a sensor other than a camera, as described above.

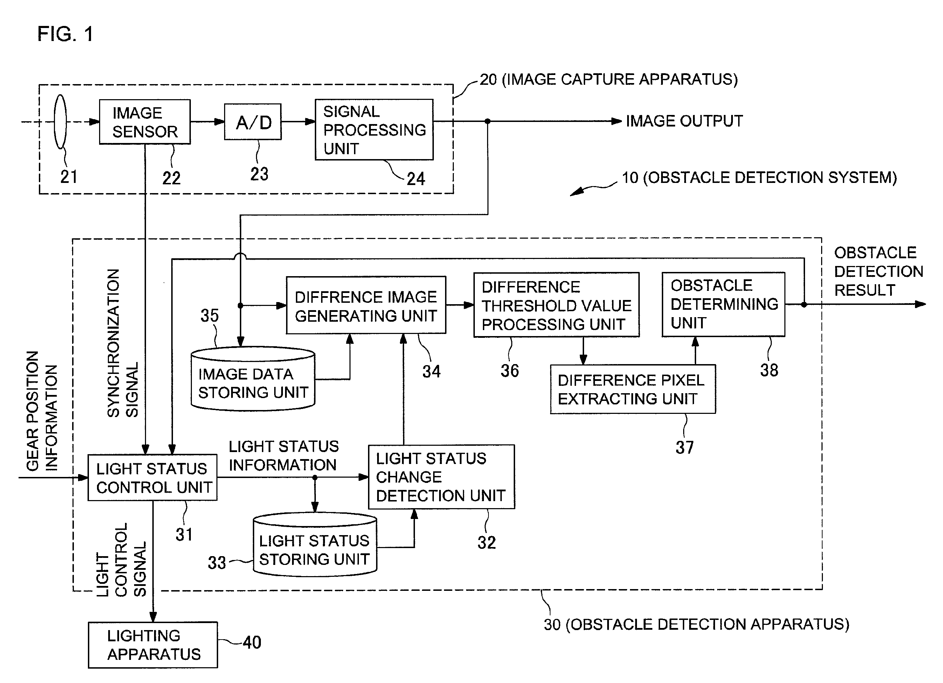

In the following, an obstacle detection system of an embodiment of the present invention will be described using drawings. Figure 1 is a block diagram showing a configuration of an obstacle detection system of an embodiment of the present invention. An obstacle detection system 10 includes an image capturing apparatus 20 for capturing an image of an object and outputting an image signal, an obstacle detection apparatus 30 for detecting presence/absence of an obstacle, and a lighting apparatus 40 mounted on a vehicle.

The image capturing apparatus 20 is attached to a predetermined position around a front or rear number plate of the vehicle at a predetermined angle, for example, and includes a taking lens 21 arranged on an optical path, an image sensor 22, an A/D converter 23, and a signal processing unit 24, and captures an image of an object in the periphery of the vehicle and generates an image signal. The taking lens 21 focuses light from the object on the image sensor 22. The image sensor 22 is a solid-state image sensor such as a CCD or a CMOS, and it photoelectrically converts object light focused by the taking lens 21 and outputs an analog signal. The A/D converter 23 converts the analog signal output from the image sensor 22 into a digital signal. The signal processing unit 24 performs known signal processing on the digital signal from the A/D converter 23 to generate and output a luminance signal, a color difference signal, and an aperture signal. Furthermore, the signal processing unit 24 performs known image signal processing such as OB (Optical Black) subtraction of subtracting a signal component corresponding to a black label, white balance adjustment, and noise processing.

The obstacle detection apparatus 30 includes a light status control unit 31, a light status change determining unit 32, a light status storing unit 33, a difference image generating unit 34, an image data storing unit 35, a difference threshold value processing unit 36, a difference pixel extracting unit 37, and an obstacle determining unit 38.

A synchronization signal from the image sensor 22 and an image signal from the signal processing unit 24, and also gear position information input from the vehicle main body are input to the obstacle detection apparatus 30, and the obstacle detection apparatus 30 detects an obstacle existing in the periphery of the vehicle based on the difference information of image signals at the time when the lighting apparatus 40 is on and when it is off. Here, the synchronization signal of the image sensor 22 is a signal indicating the timing of exposure operation at the image sensor 22, and an image signal is output from the image capturing apparatus 20 according to the timing of the synchronization signal. The gear position information is information indicating a gear position that is selected.

In the present embodiment, the lighting apparatus 40 is a light that is normally mounted on a vehicle, for example, headlights, tail lamps, backup lights, stop lights, or side marker lights. Control of turning on/off is performed when a control signal is received from the light status control unit 31 which will be described later. Additionally, the present embodiment is configured in such a way that the obstacle detection apparatus 30 directly controls the lighting apparatus 40, but the obstacle detection apparatus 30 and the lighting apparatus 40 may be connected via an engine control unit. Also, transmission of a control signal or the gear position information may be performed over an on-vehicle network such as a CAN (Controller Area Network) or a LIN (Local Interconnect Network), for example.

The light status control unit 31 controls the lighting state of the lighting apparatus 40, and also, a synchronization signal from the image sensor 22 is input thereto. The obstacle detection system according to the present embodiment assumes use at night, and thus, the lighting apparatus 40 is basically in an on state. Accordingly, in the case of detecting an obstacle in the periphery of the vehicle, the light status control unit 31 transmits a control signal to the lighting apparatus 40 so as to temporarily turn off the lighting apparatus 40.

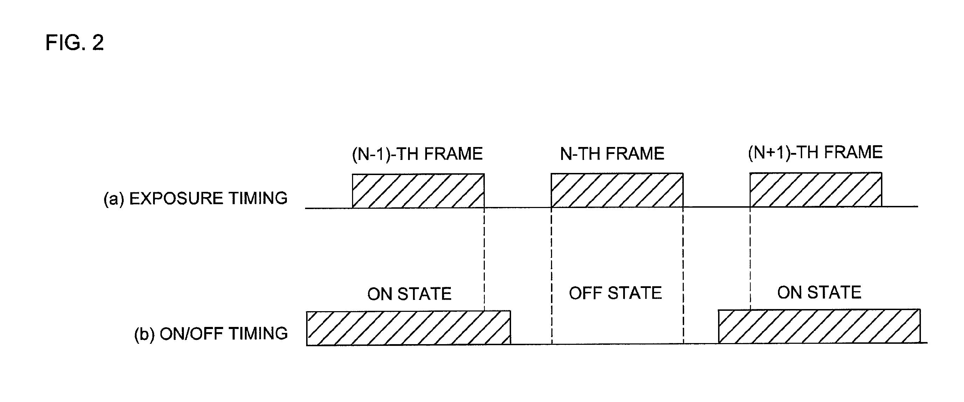

Figure 2 shows control timing for turning on/off the lighting apparatus 40. Figure 2(a) shows an exposure timing of the image capturing apparatus 20, and Figure 2(b) shows a timing of turning on/off of the lighting apparatus. The light status control unit 31 controls the turn-off timing of the lighting apparatus 40 in synchronization with the exposure timing of the image capturing apparatus 20. That is, in Figure 2(a), the lighting apparatus 40 is controlled to be in an off state during the exposure period of an N-th frame. By turning off the lighting apparatus 40 in synchronization with the exposure timing of the image capturing apparatus 20, difference information of image signals at the time when the lighting apparatus 40 is on and when it is off can be accurately extracted.

In the present embodiment, the lighting apparatus 40 is turned off for a duration corresponding to the exposure period of one frame, but the lighting apparatus 40 may be turned off for a duration corresponding to the exposure periods of a plurality of frames. Here, if the turned-off duration of the lighting apparatus 40 is long, synchronization with the exposure timing of the image capturing apparatus 20 is not always necessary because an image signal for at least one frame can be acquired. But if the turned-off duration is long, the turning off of the lighting apparatus 40 can be perceived by a person and, as a result, it is recognized as flashing of the lighting apparatus 40 during night traveling, and therefore, the turned-off duration of the lighting apparatus 40 is preferably kept short.

The light status control unit 31 switches the lighting apparatus 40 to be controlled, according to the installation position of the image capturing apparatus 20 or the traveling direction of the vehicle. For example, in the case the image capturing apparatus 20 is installed at the front of the vehicle, the light status control unit 31 takes the headlights or the side marker lights installed at the front of the vehicle as the targets of control. In the case the image capturing apparatus 20 is installed at the back of the vehicle, the tail lamps, the backup lights, the stop lights, or the side marker lights installed at the back of the vehicle are controlled. Also, in the case the image capturing apparatus 20 is installed at several positions on the vehicle, the lighting apparatus 40 to be controlled is switched according to the movement direction of the vehicle. For example, if the vehicle is moving forward, the headlights or the side marker lights installed at the front of the vehicle are made as the targets of control, and if the vehicle is moving backward, the tail lamps, the backup lights, the stop lights, or the side marker lights installed at the back of the vehicle are controlled. The light status control unit 31 can detect the movement direction of the vehicle based on the gear position information.

The light status control unit 31 transmits light status information indicating the status (on/off) of the lighting apparatus 40 to the light status storing unit 33 and the light status change determining unit 32 at the same timing as the synchronization signal from the image sensor 22. The light status storing unit 33 stores the light status information for over a specific period of time. The light status change determining unit 32 compares the light status information input from the light status control unit 31 and past light status information stored in the light status storing unit 33, and detects whether or not there is a change in the lighting state of the lighting apparatus 40 (that is, whether it has changed from the on state to the off state, or it has changed from the off state to the on state). When it is detected that there is a change in the lighting state of the lighting apparatus 40, the light status change determining unit 32 sends a signal to indicate such change to the difference image generating unit 34.

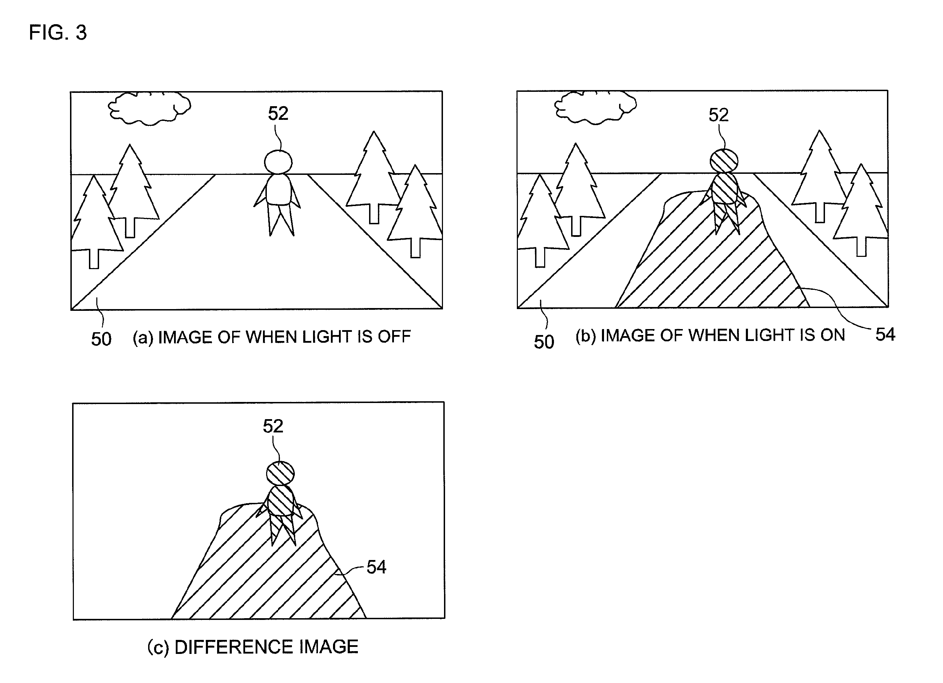

The difference image generating unit 34 calculates, and outputs as a difference image, a difference between the image signals generated when the lighting apparatus 40 is on and when it is off. Figure 3 shows how a difference image is generated at the difference image generating unit 34. Figure 3(a) is an image captured when the lighting apparatus 40 is off, and it is shown that a person 52 as an obstacle is walking on a road 50. Figure 3(b) is an image obtained by capturing when the lighting apparatus 40 is on, and a state is shown where the person 52 and a part 54 of the road 50 are shone by the lighting apparatus 40. Figure 3(c) is an image showing a difference image calculated by the difference image generation unit 34 based on the images of Figures 3(a) and 3(b). Only the person 52 and the part 54 of the road shone by the lighting apparatus 40 are extracted, and a change in the image signal due to the change in the lighting state of the lighting apparatus 40 can be thereby detected.

The difference image generating unit 34 generates a difference image between an image signal of the current frame input from the image capturing apparatus 20 and an image signal of a past frame stored in the image data storing unit 35, when a signal is input from the light status change determining unit 32 (that is, when it is detected that there is a change in the lighting state of the lighting apparatus 40). Image signals input from the image capturing apparatus 20 are stored in the image data storing unit 35.

An image signal stored in the image data storing unit 35 and the light status information stored in the light status storing unit 33 are associated with each other by frame number information. Accordingly, the light status storing unit 33 can store, for an image of a frame stored in the image data storing unit 35, information of whether it has been captured in a state where the lighting apparatus 40 is on or not. The difference image generating unit 34 can thereby eliminate the possibility of erroneously detecting a difference between images occurring irrespective of on/off of the lighting apparatus 40 (for example, a case of movement of the vehicle or the object), while also being able to calculate a difference between images occurring based on turning on/off of the lighting apparatus 40.

The difference threshold value processing unit 36 performs difference threshold processing on the difference information of each pixel forming a difference image generated by the difference image generating unit 34, and outputs a threshold image. The difference threshold processing is a process of comparing a difference value of each pixel with a predetermined value DiffTH, and determining a pixel with a difference (a difference pixel) in a case the difference value is greater than the threshold value DiffTH, and determining a pixel without a difference (a non-difference pixel) in a case the difference value is smaller than the threshold value DiffTH. Since a small difference caused by noise and a small difference due to movement of an object or the vehicle can be removed by adjusting the threshold value DiffTH to an appropriate value, difference information reflecting a change in the lighting state of the lighting apparatus 40 can be reliably detected.

The difference pixel extracting unit 37 decides, with respect to a threshold image input from the difference threshold value processing unit 36, a region necessary for detection of an obstacle in an image frame as an extraction target region, and extracts a difference pixel in this extraction target region. In the present embodiment, for example, it is set such that an obstacle at a height of a predetermined value or higher from the road is detected, and the difference pixel extracting unit 37 detects a horizon in an image and takes a region above the horizon as the extraction target region. Here, a known method can be applied to detection of the horizon in an image.

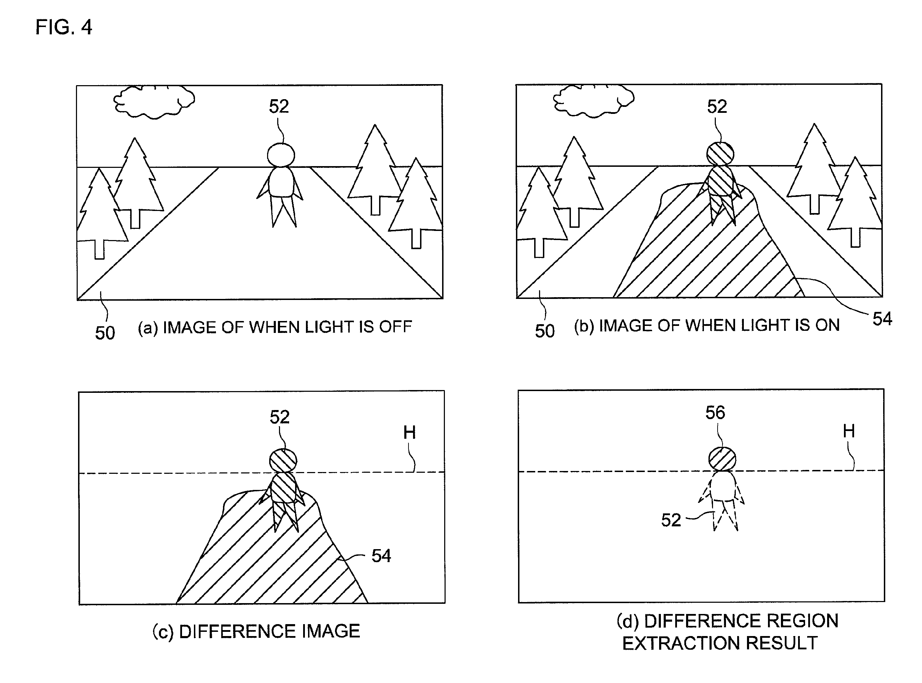

Figure 4 shows how a difference pixel is extracted by the difference pixel extracting unit 37. Figure 4(a) is an image frame captured when the lighting apparatus 40 is off, and a pedestrian 52 on a road 50 is the obstacle. In Figure 4(b), a part 54 of the road 50 and the pedestrian 52 are illuminated with stop lamps as the lighting apparatus 40.

Here, since, in a difference image (Figure 4(c)) that is obtained by performing the difference threshold processing on the difference image between Figures 4(a) and (b), a difference image is formed also in a region on the road illuminated with the stop lamps (a region where an obstacle is not expected), there is a possibility that an obstacle is not accurately detected. For this reason, the difference pixel extracting unit 37 removes, from the difference image of Figure 4(c), a region below a horizon H, and extracts a difference pixel existing in a region above the horizon H (the extraction target region).

In Figure 4(d), a difference pixel which has been extracted in the region above the horizon H and which is in the region of a head 56 of the pedestrian 52 as an obstacle is extracted. Also, in a case no pedestrian (obstacle) exists, difference pixels in Figure 4(c) would all exist in a removed region below the horizon H, and thus, difference pixels to be eventually extracted would not exist.

The obstacle determining unit 38 determines presence/absence of an obstacle based on the extraction result of the difference pixel extracting unit 37. For example, in the case a difference pixel exists in a threshold image output from the difference pixel extracting unit 37, it is determined that an obstacle exists.

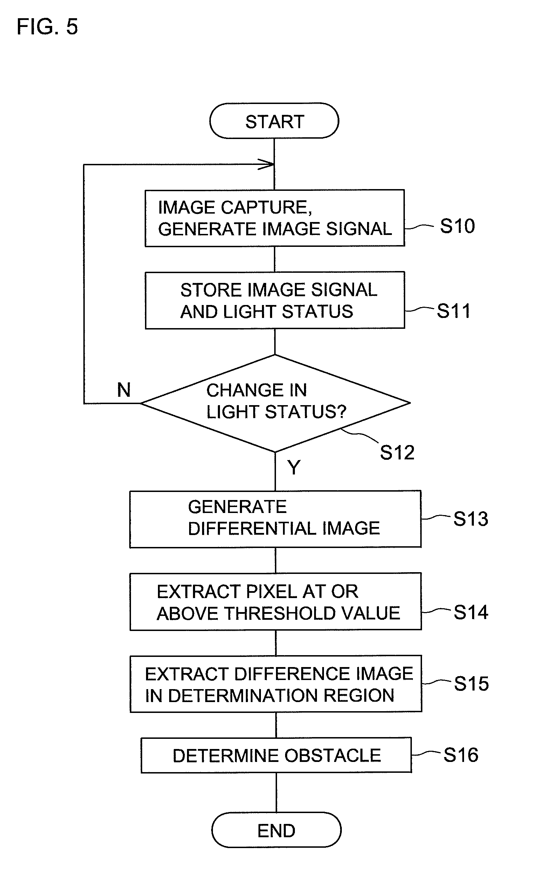

In the following, an operation of the obstacle detection apparatus of the configuration described above will be described using a flow chart of Figure 5. First, the image capturing apparatus 20 captures an image of the periphery of a vehicle, and generates an image signal (S10). The generated image signal is associated with a frame number and is stored in the image data storing unit 35. Also, the light status control unit 31 receives a synchronization signal from the image sensor 22, and stores light status information indicating the control state of the lighting apparatus 40 in the light status storing unit 33 in association with a frame number (S11).

Here, the light status change determining unit 32 detects whether the lighting state of the lighting apparatus 40 has changed or not (S12). In the case there is no change in the light status, the operation as described above is repeated after returning to step S10. On the other hand, in the case there is a change in the lighting state of the light, the difference image generating unit 34 performs difference processing on the image signal of an immediately preceding frame stored in the image data storing unit and the image signal from the image capturing apparatus 20 to output as a difference image to the difference threshold value processing unit 36 (S13).

The difference threshold value processing unit 36 determines whether the difference value of each pixel, in the difference image from the difference image generating unit 34, exceeds a threshold value or not, and extracts only pixels exceeding the threshold value to thereby generate a threshold image, and transmit it to the difference pixel extracting unit 37 (S14). It is thereby possible to extract only the image of the region illuminated by the light, and the possibility of erroneous detection due to noise or the like can be eliminated.

The difference pixel extracting unit 37 extracts, from the threshold image from the difference threshold value processing unit 36, only the pixel information of only the part higher than a predetermined height, and transmits the same to the obstacle determining unit 38 (S15). It is thereby possible to remove a region where no obstacle exists from the region illuminated by the lighting apparatus 40, and the possibility of erroneous detection of an obstacle can be eliminated.

The obstacle determining unit 38 detects whether or not pixel information exceeding a threshold value is included in the signal from the difference pixel extracting unit 37 (S16). If it is included, it is determined that an obstacle exists in the region illuminated by the lighting apparatus 40, and an obstacle detection result is transmitted to an on-vehicle network. By displaying information indicating that an obstacle exists on a display at the driver's seat, for example, a driver can be notified of the existence of the obstacle.

Furthermore, the lighting apparatus 40 can be controlled for the purpose of notifying a pedestrian or the like existing in the periphery of the vehicle of the existence of the vehicle. In the case it is determined by the obstacle determining unit 38 that an obstacle exists in the periphery of the vehicle, the light status control unit 31 controls the lighting apparatus 40 to be in a lighting state different from normal. For example, the lighting apparatus 40 is made to flash for a specific period of time, or the illumination intensity of the lighting apparatus 40 is changed. A pedestrian or the like in the periphery of the vehicle can thereby recognize the change in the illumination state of the vehicle, and recognize the approaching of the vehicle.

According to the obstacle detection system of the embodiment described above, by using a difference between images of when the lighting apparatus is on and when it is off, an obstacle in the periphery of a vehicle can be detected in a low illumination environment, such as at nighttime, an image of the periphery of the vehicle can be output and, at the same time, presence/absence of an obstacle existing in the image can be presented to the driver, and also, the periphery of the vehicle can be warned of the approaching of the vehicle.

Heretofore, an example of an embodiment of the present invention has been described, but the present invention is not limited to this embodiment. For example, an image is processed on a pixel-by-pixel basis in the embodiment described above, but the image may be reduced and then processed. In this case, the amount of computation can be reduced, and thus, there are advantages such as reduction in the detection time and reduction in the number of arithmetic processors.

Furthermore, in the embodiment described above, an extraction target region is obtained by detecting, by the difference pixel extracting unit, the horizon in image, but the extraction target region may be fixed irrespective of the image. Or, the fixed horizon may be adopted only when no horizon is shown in the image and the horizon cannot be extracted. When assuming that a vehicle is on a horizontal road where there is no obstacle, the range that the illumination range of the lighting apparatus can reach on the road is limited. When also taking the difference threshold processing of the embodiment described above into account, the distance within which a pixel reflecting reflected light of the lighting apparatus from the road is determined to be a difference pixel at nighttime is limited. Therefore, the position of the fixed horizon can be set, taking into consideration the illumination angle and the illumination intensity of the lighting apparatus, the assumed darkness of nighttime, the threshold value for the difference threshold processing, and the like.

Furthermore, in the embodiment described above, the explanation is given assuming that the lighting apparatus is a light that is normally mounted on a vehicle, such as headlights, side marker lights, tail lamps, backup lights, stop lights, or the like, but the lighting apparatus is not limited to these. For example, it may be an auxiliary light mounted to supplement nighttime visibility of the periphery of a vehicle, or an inexpensive light may be separately mounted for obstacle detection.

In the embodiment described above, the light status change determining unit for determining a change in the light status is provided, but this may be omitted. In this case, for example, the light status information may be transmitted directly from the light status control unit to the difference image generating unit 34, and a difference image may be generated when the difference image generating unit 34 detects a change in the light status. Also, information about the light status at the time of image capturing may be included in an image signal stored in the image data storing unit 35, and, in this case, the light status storing unit can be omitted.

Moreover, in the embodiment described above, the image capturing apparatus (camera) and the obstacle detection apparatus are separately configured, and they, as a whole, configure the obstacle detection system, but the image capturing apparatus and the obstacle detection apparatus may also be integrally configured. In the present application, that which is configured by integrating the image capturing apparatus and the obstacle detection apparatus is also referred to as the obstacle detection system.

Preferred embodiments of the present invention that are currently conceivable are described above, but it is understood that various modifications are possible for the present embodiment, and every such modification within the true spirit and scope of the present invention is intended to be included in the appended claims.

### [Industrial Applicability]

As described above, since the obstacle detection system according to the present invention detects an obstacle in the periphery of a vehicle using a lighting apparatus provided in the vehicle, it has a significant effect that an obstacle in the periphery of the vehicle can be detected even in a low illumination environment, without needing a sensor other than the image capturing apparatus, and is useful as an obstacle detection system and the like for detecting an obstacle in the periphery of a vehicle in a low illumination environment.

### Reference Signs List

| | |
|---|---|
| 10 | Obstacle detection system |
| 20 | Image capturing apparatus |
| 22 | Image sensor |
| 30 | Obstacle detection apparatus |
| 31 | Light status control unit |
| 32 | Light status change determining unit |
| 33 | Light status storing unit |
| 34 | Difference image generating unit |
| 35 | Image data storing unit |
| 36 | Difference threshold value processing unit |
| 37 | Difference pixel extracting unit |
| 38 | Obstacle determining unit |
| 40 | Lighting apparatus |

## Claims

1. An obstacle detection system comprising an image capturing apparatus for capturing an image of a periphery of a vehicle and generating image information, an obstacle detection apparatus for detecting an obstacle near the vehicle based on the image information, and a lighting apparatus mounted on the vehicle,
wherein the obstacle detection apparatus comprises:
a light control unit for controlling a lighting state of the lighting apparatus,
a difference image generating unit for generating a difference image between image information generated by the image capturing apparatus when the lighting apparatus is on and image information generated by the image capturing apparatus when the lighting apparatus is off, and
an obstacle determining unit for determining presence/absence of the obstacle based on an image included in the difference image.

2. The obstacle detection system according to claim 1, wherein the obstacle detection apparatus includes a light status change determining unit for determining a change in the lighting state of the lighting apparatus, and an image data storing unit for storing the image information sent from the image capturing apparatus,
wherein, when the light status change determining unit determines change in the lighting state of the lighting apparatus, the difference image generating unit generates a difference image between the image information sent from the image capturing apparatus and the image information stored in the image data storing unit.

3. The obstacle detection system according to claim 1, wherein the light control unit changes the lighting state of the lighting apparatus between image capturing periods of each captured image frame of the image capturing apparatus.

4. The obstacle detection system according to claim 1, wherein the lighting apparatus is determined according to a position of the image capturing apparatus installed on the vehicle.

5. The obstacle detection system according to claim 1, wherein the lighting apparatus is determined according to a traveling direction of the vehicle.

6. The obstacle detection system according to claim 1, wherein, in a case difference information exceeding a threshold value is detected in a region above a horizon in the difference image, the obstacle determining unit determines presence of the obstacle.

7. The obstacle detection system according to claim 1, wherein, in a case presence of the obstacle is determined, the light control unit changes the lighting state of the lighting apparatus.

8. An obstacle detection method comprising:
capturing an image of a periphery of a vehicle and generating image information;
controlling a lighting state of a lighting apparatus mounted on the vehicle;
generating a difference image between image information generated by the image capturing apparatus when the lighting apparatus is on and image information generated by the image capturing apparatus when the lighting apparatus is off; and
determining presence/absence of the obstacle based on an image included in the difference image.

9. An obstacle detection apparatus for detecting an obstacle near a vehicle based on image information of a periphery of the vehicle generated by an image capturing apparatus, comprising:
a light control unit for controlling a lighting state of a lighting apparatus mounted on the vehicle;
a difference image generating unit for generating a difference image between image information generated by the image capturing apparatus when the lighting apparatus is on and image information generated by the image capturing apparatus when the lighting apparatus is off; and
an obstacle determining unit for determining presence/absence of the obstacle based on an image included in the difference image.
